# EUROPÄISCHE PATENTANMELDUNG

(11) **EP 0 860 333 A2**
(43) Veröffentlichungstag der Anmeldung: **26.08.1998**
(21) Anmeldenummer: 98101151.3
(22) Anmeldetag: 23.01.1998
(51) Int. Cl.: B60R 22/18

(54) **Fahrzeug-Sicherheitsgurt**

(30) Priorität: 25.02.1997 DE 29703358 U
(71) Anmelder: TRW Occupant Restraint Systems GmbH & Co. KG, 73551 Alfdorf (DE)
(72) Erfinder: Wier, Franz, 73571 Göggingen (DE); Wier, Michael, 73571 Göggingen (DE)
(74) Vertreter: Degwert, Hartmut, Dipl.-Phys.

(57) **Zusammenfassung**

Ein Fahrzeug-Sicherheitsgurt weist einen am Gurtband (1) befestigten Verankerungsbeschlag (2; 10; 20; 30) auf. Zur Vereinfachung der Herstellung des Fahrzeug-Sicherheitsgurtes und zur Einsparung von Gurtband ist der Verankerungsbeschlag (2; 10; 20; 30) mit zwei einander gegenüberliegende Klemmflächen (6a, 6b; 13a, 13b; 22a, 22b) versehen, zwischen denen das Gurtband (1) eingeklemmt ist.

## Beschreibung

Die Erfindung betrifft einen Fahrzeug-Sicherheitsgurt mit einem am Gurtband befestigten Verankerungsbeschlag.

Bekannte Fahrzeug-Sicherheitsgurte weisen einen Verankerungsbeschlag mit einer Befestigungsbohrung zur Befestigung des Beschlags am Fahrzeugaufbau und einer Öse zur Gurtbandbefestigung auf. Zur Befestigung des Gurtbands wird dieses durch die Öse gesteckt, umgeschlagen und zu einer Schlaufe vernäht. Um die Schlaufe und die Nahte ausreichend zugfest zu gestalten, ist eine erhebliche Gurtbandlänge nötig. Das Einschlaufen des Gurtbands in die die Öse und das anschließende Vernähen des Gurtbands zu der Schlaufe stellen kostenaufwendige Arbeitsvorgänge dar.

Durch die Erfindung wird die Herstellung des Fahrzeug-Sicherheitsgurts vereinfacht und Gurtband eingespart. Die maschinelle Befestigung des Gurtbands am Verankerungsbeschlag ist erleichtert, wodurch kostenaufwendige Arbeitsvorgange entfallen.

Erfindungsgemäß ist vorgesehen, daß der Verankerungsbeschlag zwei einander gegenüberliegende Klemmflächen aufweist, zwischen denen das Gurtband eingeklemmt ist. Ein Halten des Gurtbands zwischen zwei Klemmflächen ermöglicht eine sichere Anbringung des Gurtbands am Verankerungsbeschlag, ohne das Gurtband vernahen zu müssen. Durch flächiges Klemmen wird das Gurtband gleichmäßig gehalten, so daß bei Zugbelastung des Gurtbands keine lokale, stark erhöhte Materialbelastung in diesem auftritt. Bei entsprechender Gestaltung der Klemmflächen kann die Klemmlänge daher kurz gehalten werden, und es kann gegenüber einer vernahten Schlaufenbefestigung Gurtband eingespart werden.

Der Verankerungsbeschlag ist vorteilhafterweise als flachgepresstes rohrförmiges Bauteil ausgebildet. Das flachgepresste rohrförmige Bauteil nimmt das Gurtband in sich auf. Hierdurch ist der Verankerungsbeschlag auf einfache Weise mit nur einem Bauteil verwirklicht. Je nach Anforderung und zur Verfügung stehendem Einbauraum kann das Gurtband in voller Breite oder um seine Längsrichtung gefaltet vor dem Flachpressen in das Rohr eingeführt werden. Nach dem Flachpressen halten die Seitenabschnitte des flachgepressten Rohres als federnde Elemente die Vorspannung auf das Gurtband aufrecht.

Ebenfalls vorteilhaft ist der Aufbau des Verankerungsbeschlags aus einem gefalteten Blechstreifen, der das Gurtband ähnlich wie ein flachgepresstes Rohr umschließt. Die Seitenabschnitte des Blechstreifens sind hierzu in Lähgsrichtung umgefaltet, um das Gurtband aufzunehmen. Um eine Verschiebung der umgefalteten Seitenabschnitte gegeneinander bei Zugbelastung zu vermeiden, weisen die umgefalteten Seitenabschnitte eine komplementär gewellte Stoßkante auf.

Gemaß einer anderen Ausführungsform der Erfindung weist der Verankerungsbeschlag zwei aufeinanderliegende Blechstreifen mit seitlichen Haltenasen auf, die das Gurtband zwischen sich aufnehmen. Die Haltenasen sind in einem seitlichen Trägerteil gehalten und verstemmt, um die Blechstreifen miteinander zu verbinden, gegen das Gurtband vorzuspannen und in dem Tragerteil zu sichern. Neben einer einfachen Montage des Verankerungsbeschlags wird auch dessen Herstellung erleichtert, da einfache Blechteile verwendet werden können, ohne daß zusätzliche Umformprozesse erforderlich sind.

In Weiterbildung der Erfindung sind die Klemmflächen komplementär zueinander wellenförmig verformt. Durch wellenförmiges Gestalten der Klemmflächen werden diese zum einen gegenüber einer gestreckten Gestaltung bei gleicher Gesamtlänge des Verankerungsbeschlags vergrößert, zum anderen tragen auch die dadurch entstehenden Umlenkungen des Gurtbands zur sicheren, auszugsfesten Halterung des Gurtbands in dem Verankerungsbeschlag bei.

Gemaß einer die Erfindung weiterbildenden Maßnahme nimmt die Wellenhöhe zu der Verankerung am Fahrzeugaufbau hin in Gurtbandlängsrichtung zu. Die pro Welle vom Gurtband auf den Verankerungsbeschlag übertragbare Kraft steigt daher zur Verankerung am Fahrzeugaufbau hin an, wodurch eine zusätzliche Sicherheitsreserve gegen das Ausziehen des Gurtbands gegeben ist.

Indem der Verankerungsbeschlag wenigstens abschnittsweise wellenförmig ausgebildet ist und durch eine Kraft in Gurtbandlängsrichtung, die durch ein vorbestimmtes Gurtkraftbegrenzungs-Diagramm bestimmt ist, durch Strecken der wellenförmig ausgebildeten Abschnitte verformbar ist, kann die im Gurtband auftretende Kraft begrenzt werden. Die bestimmte Kraft beträgt vorteilhafterweise zwischen 2500N und 6000N.

Entsprechend einer anderen Weiterbildung der Erfindung sind halbkugelförmige Eindrückungen und komplementäre Ausbauchungen in den Klemmflachen vorgesehen, um die Klemmflächen zu vergrößern und das Gurtband sicher im Verankerungsbeschlag zu halten.

Vorteilhafterweise sind die Klemmflächen mit quer zur Gurtbandlängsrichtung laufenden Rillen versehen. Aufgrund des gegenüber einer glatten Ausführung der Klemmflächen höheren Reibwiderstands einer solchen Anordnung kann auch die Gesamtklemmfläche bei gleicher Belastbarkeit verringert werden, was einer kompakten Ausführung des Verankerungsbeschlags zugute kommt. Ist der Verankerungsbeschlag als Rohr ausgebildet, so können die Querrillen vor dem Flachpressen des Rohrs in einfacher Weise als Innengewinde angebracht werden.

Zu einer sicheren Halterung des Gurtbands im Verankerungsbeschlag trägt weiterhin eine Gummiauflage auf den Klemmflächen bei. Auch hierdurch kann die Klemmfläche und damit die Gesamtabmessung des Verankerungsbeschlags gegenüber einer Ausführung ohne Gummiauflage bei gleicher Belastbarkeit verringert werden. Der Reibwiderstand zwischen Gurtband und Klemmfläche kann weiter vergrößert werden, wenn auch das Gurtband mit einer Gummiauflage versehen wird.

Entsprechend einer vorteilhaften Weiterbildung der Erfindung sind die Klemmflächen durch Niete miteinander verbunden. Durch Niete können die Klemmflächen gegen das Gurtband vorgespannt werden, und es kann eine gleichmäßige Klemmkraft auf das Gurtband über dessen gesamte Klemmlange erreicht werden. Um das Gurtbandgewebe beim Durchstecken der Niete nicht zu verletzen, sondern beiseite zu schieben, weisen die Niete im nicht vernieteten Zustand ein spitz zulaufendes Vorderteil auf. Die Niete können dabei je nach gewünschter Klemmkraftverteilung seitlich oder in der Mitte der Klemmflächen angeordnet sein.

Zur Verbindung der Klemmflächen kann ebenfalls eine mit einer Federscheibe versehene Schraubenverbindung dienen. Durch den Einsatz der Federscheibe wird die von der Schraubenverbindung aufgebrachte Vorspannkraft gleichmäßig auf die Klemmflächen und damit auf das Gurtband übertragen. Die Schraubenverbindung kann hierbei auch als Verbindung des Verankerungsbeschlags zum Fahrzeugaufbau ausgebildet sein.

Bei einem anderen Ausführungsbeispiel der Erfindung ist vorgesehen, daß die Klemmflächen in Gurtbandquerrichtung gefaltet sind. Hierdurch ist eine gute Übertragung der im Belastungsfall auf das Gurtband wirkenden Zugkraft auf die Klemmflächen und somit den Verankerungsbeschlag ermöglicht. Die gefalteten Klemmflächen können von einer Befestigungsklammer umfasst werden, was einer Erhöhung der Vorspannung der Klemmflächen gegen das Gurtband und einer großflächigen Kraftübertragung auf die Befestigungsklammer dient.

Es ist vorteilhaft, wenn die Wandstärke des Verankerungsbeschlags quer zur Längsrichtung des Gurtbandes von den Gurtbandaußenkanten zu dessen Mitte hin zunimmt. Eine höhere Wandstärke in der Mitte des Verankerungsbeschlags begünstigt aufgrund der höheren Steifigkeit eine gleichmäßige Klemmkraftverteilung auf das Gurtband. Auch wenn die Klemmflächen lediglich seitlich des Gurtbandes miteinander verbunden sind, biegt sich der Verankerungsbeschlag nur geringfügig, und die Klemmkräft kann auch in der Mitte noch aufrechterhalten werden.

Es ist ebenfalls vorteilhaft, die Klemmflächen quer zur Längsrichtung des Gurtbandes konvex auszubilden. Auf diese Weise wird das Gurtband in der Mitte zuverlässig geklemmt, ohne daß sich eine Biegung des Verankerungsbeschlags bei seitlichem Zusammenhalten der Klemmflächen negativ auswirken kann.

Eine weitere Ausführungsform der Erfindung zeichnet sich dadurch aus, daß die Klemmflächen in Längsrichtung des Gurtbandes verlaufende Vertiefungen und komplementäre Erhebungen aufweisen, die das Gurtband auch bei starker Belastung sicher in dem Verankerungsbeschlag festhalten.

Um den Verankerungsbeschlag über die Breite des Gurtbandes zu versteifen, sind die Endabschnitte des Verankerungsbeschlages vorteilhafterweise vom Gurtband weggebogen. Auf einfache Weise kann hierdurch ein Versteifung des Verankerungsbeschlags in dessen Endbereich erreicht werden, was einer gleichmäßigen Klemmkraftverteilung und damit einer sicheren Halterung des Gurtbandes zugute kommt.

Bevorzugte Ausführungsbeispiele der Erfindung sind in der Zeichnung dargestellt und werden nachfolgend beschrieben. Hierbei zeigt:
Figur 1 eine Draufsicht auf den Verankerungsbeschlag eines ersten Ausführungsbeispiels der Erfindung,
Figur 2 eine Schnittansicht des Verankerungsbeschlags der Figur 1 entlang der Linie A-A,
Figur 3 eine Schnittansicht des Verankerungsbeschlags der Figur 1 entlang der Linie B-B,
Figur 4 eine Draufsicht auf den Verankerungsbeschlag eines zweiten Ausführungsbeispiels der Erfindung,
Figur 5 eine Schnittansicht des Verankerungsbeschlags eines dritten Ausführungsbeispiels der Erfindung,
Figur 6 eine Schnittansicht des Verankerungsbeschlags eines vierten Ausführungsbeispiels der Erfindung,
Figur 7 eine Seitenansicht des Verankerungsbeschlags eines fünften Ausführungsbeispiels der Erfindung,
Figur 8 eine Schnittansicht des Verankerungsbeschlags der Figur 7 entlang der Linie C-C,
Figur 9 eine Schnittansicht eines sechsten Ausführungsbeispiels eines erfindungsgemäßen Verankerungsbeschlags,
Figur 10 eine Schnittansicht eines siebten erfindungsgemäßen Verankerungsbeschlags,
Figur 11 eine Seitenansicht eines achten Ausführungsbeispiels des erfindungsgemäßen Verankerungsbeschlags und
Figur 12 eine Kennlinie der Gurtbandkraft F über der Verformung S des Verankerungsbeschlags der Figuren 1 bis 3.

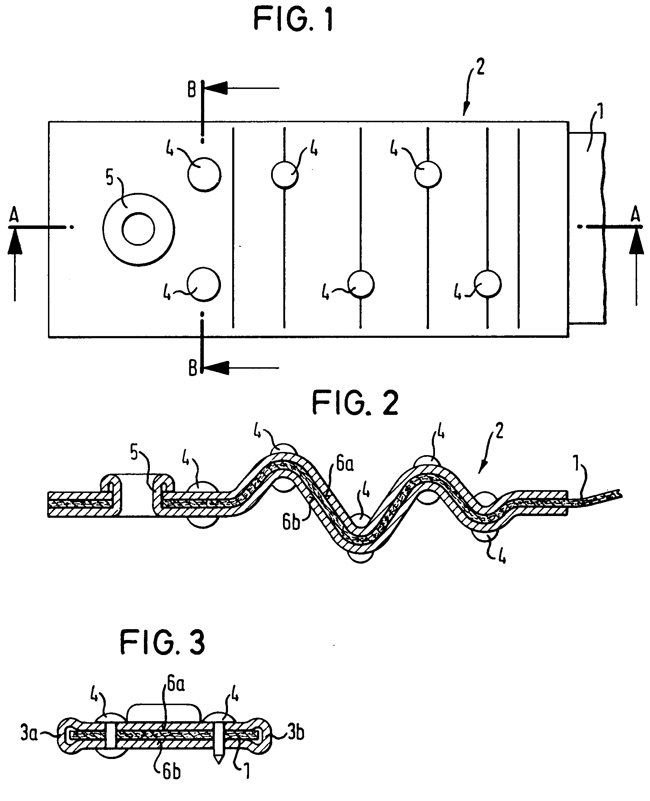

Ein Fahrzeug-Sicherheitsgurt weist einen, in der Fig. 1 dargestellten, am Gurtband 1 befestigten Verankerungsbeschlag 2 auf, der in seinem hinteren, dem Gurtband abgewandten Abschnitt mit einem Durchzug 5 versehen ist, um den Verankerungsbeschlag 2 mit einer nicht dargestellten Befestigungsschraube an einem ebenfalls nicht gezeigten Fahrzeugaufbau zu befestigen. Der Verankerungsbeschlag 2 ist als flachgepresstes Rohr ausgebildet, in das vor dem Flachpressen das Gurtband 1 eingeführt wird und das nachfolgend durch ein Preßwerkzeug zu der in den Fig. 1, 2 und 3 gezeigten Gestalt verformt wird. Durch die Verformung des Rohres wird das Gurtband 1 in dem Verankerungsbeschlag 2 eingeklemmt. Um diese Klemmwirkung weiter zu verstärken, sind Niete 4 vorgesehen, die sich quer zum Gurtband durch den Verankerungsbeschlag 2 erstrecken.

In der Schnittansicht der Figur 2 entlang der Linie A-A der Figur 1 sind die Klemmflächen 6a, 6b des Verankerungsbeschlags 2 zu erkennen, zwischen denen das Gurtband 1 gehalten ist. Der Verankerungsbeschlag 2 ist wellenförmig verformt, um die zum Ausziehen des Gurtbands 1 aus dem Verankerungsbeschlag 2 notwendige Kraft gegenüber einer gestreckten Ausführung zu erhöhen. Die Wellenhöhe nimmt hierbei zu der Verankerung am Fahrzeugaufbau hin in Gurtbandlängsrichtung zu. Übersteigt die im Belastungsfall auf das Gurtband 1 ausgeübte Kraft einen durch ein vorbestimmtes Gurtkraftbegrenzungs-Diagramm bestimmten Wert, verformt sich der Verankerungsbeschlag 2, indem die Wellen gestreckt werden. Damit kann die im Gurtband 1 auftretende Kraft begrenzt werden. Der Durchzug 5 für die Befestigungsschraube des Verankerungsbeschlags 2 an der Verankerung ist in seinem an der Oberseite des Verankerungsbeschlags 2 liegenden Abschnitt umgebördelt, um die Klemmflächen 6a, 6b im Bereich des Durchzugs 5 gegen das Gurtband 1 zu drücken und dadurch dessen sicheren Halt in dem Verankerungsbeschlag 2 mit zu gewährleisten.

In der Schnittansicht des Verankerungsbeschlags der Figur 3 entlang der Linie B-B der Figur 1 sind die Niete 4 dargestellt, die die Klemmflächen 6a, 6b miteinander verbinden und gegen das Gurtband 1 vorspannen. Hierdurch werden die zwischen den Klemmflächen 6a, 6b und dem Gurtband 1 wirkenden Klemmkräfte erhöht und gleichmäßig auf die Klemmflächen verteilt. Beim Anbringen der Niete 4 an dem Verankerungsbeschlag 2 ist darauf zu achten, daß das Gewebe des Gurtbands 1 beim Durchstecken der Niete 4 nicht beschädigt wird. Die Niete 4 sind dazu in ihrem vorderen Bereich spitz zulaufend ausgebildet, so daß die Fäden des Gurtbandgewebes beim Durchstecken der Niete 4 seitlich verdrängt werden. Die seitlichen Abschnitte 3a, 3b des flachgepressten Rohrs bewirken eine federnde Verbindung zwischen den Klemmflächen 6a, 6b und halten die Klemmkräfte auf das Gurtband 1 auch nach dem Preßvorgang aufrecht.

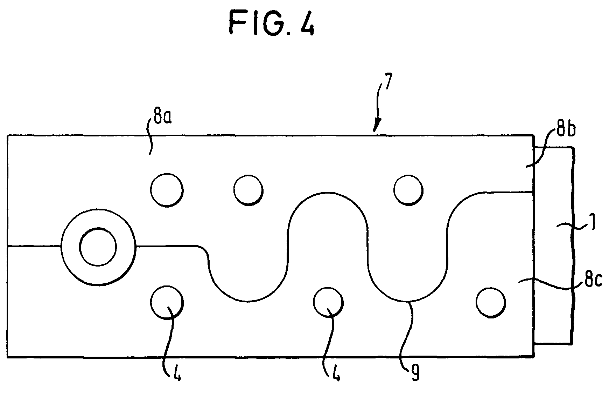

Fig. 4 zeigt einen Verankerungsbeschlag 7 eines zweiten Ausführungsbeispiels der Erfindung. Der Verankerungsbeschlag 7 besteht hier aus einem einzigen Blechstreifen 8a, dessen Seitenabschnitte 8b, 8c umgefaltet sind, um das Gurtband 1 ähnlich wie ein flachgepresstes Rohr aufzunehmen. Um bei Zugbelastung des Gurtbands 1 eine Verschiebung der umgefalteten Seitenabschnitte 8b, 8c gegeneinander und gegen den auf der anderen Seite des Gurtbands 1 liegenden Abschnitt des Blechstreifens 8a weitgehend zu verhindern, sind die Seitenabschnitte 8b, 8c mit einer komplementär gewellten Stoßkante versehen, entlang der sie, wenigstens teilweise bei Zugbelastung des Gurtbands 1, miteinander in Eingriff stehen.

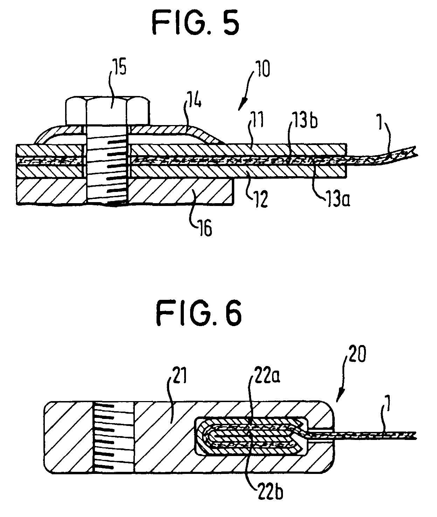

Die Schnittansicht der Figur 5 zeigt ein drittes Ausführungsbeispiel der Erfindung mit einem Verankerungsbeschlag 10, der einen oberen Blechstreifen 11 und einen unteren Blechstreifen 12 aufweist, die das Gurtband 1 zwischen sich aufnehmen. Der Verankerungsbeschlag 10 wird durch eine Befestigungsschraube 15 an einem Fahrzeugaufbau 16 befestigt. Eine Federscheibe 14 stützt sich einerseits an der Befestigungsschraube 15 und andererseits an dem oberen Blechstreifen 11 ab. Die durch die Befestigungsschraube 15 aufgebrachte Vorspannung wird dadurch über die Federscheibe 14 auf den oberen Blechstreifen 11 übertragen und spannt damit die Klemmflächen 13a, 13b gegen das Gurtband 1 vor. Infolgedessen ist das Gurtband 1 zwischen der Klemmfläche 13a des oberen Blechstreifens 11 und der Klemmfläche 13b des unteren Blechstreifens 12 eingeklemmt und gegen Ausziehen gesichert. Die längliche Federscheibe 14 erstreckt sich von der Befestigungsschraube 15 aus in Richtung des freien Endes des Gurtbands 1. Die Federscheibe 14 ist dabei so ausgebildet, daß eine gleichmäßige Verteilung der Klemmkraft auf das Gurtband 1 erreicht wird.

In der in der Fig. 6 gezeigten Schnittansicht eines Verankerungsbeschlags eines vierten Ausführungsbeispiels des erfindungsgemäßen Fahrzeug-Sicherheitsgurts ist das Gurtband 1 in dem Verankerungsbeschlag 20 gehalten. Der Verankerungsbeschlag 20 besteht aus einem flachgepressten Rohr mit Klemmflächen 22a, 22b, die einmal um 180° in Gurtbandquerrichtung gefaltet sind und das Gurtband 1 zwischen sich aufnehmen. Der Verankerungsbeschlag 20 wird von einer Befestigungsklammer 21 klammerförmig umgriffen, die einen Schlitz zur Durchführung des Gurtbands 1 aufweist. In der Befestigungsklammer 21 ist eine Bohrung vorgesehen, in die eine Befestigungsschraube zur Befestigung an einem Fahrzeugaufbau eingeführt werden kann. Im Belastungsfall wird die auf das Gurtband 1 wirkende Zugkraft zunächst auf den Verankerungsbeschlag 20 und dann auf die Befestigungsklammer 21 übertragen. Durch entsprechende großflächige Gestaltung der Berührungsflächen zwischen dem Verankerungsbeschlag 20 und der Befestigungsklammer 21 wird eine hohe lokale Materialbelastung vermieden.

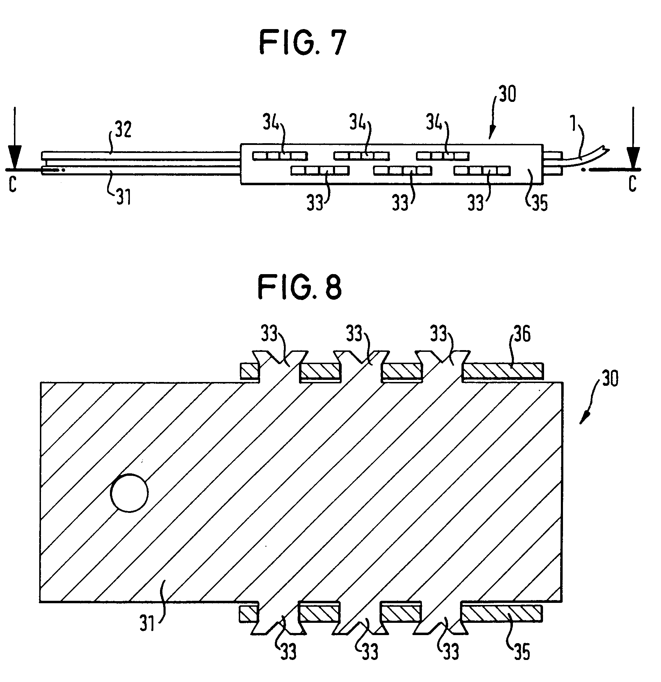

Fig. 7 und Fig. 8 zeigen einen Verankerungsbeschlag 30 eines fünften Ausführungsbeispiels der Erfindung. Das Gurtband 1 ist hier zwischen zwei Blechstreifen 31, 32 gelegt. Die Blechstreifen 31, 32 sind mit seitlichen Haltenasen 33, 34 versehen. Zur Verbindung der beiden Blechstreifen 31, 32 dienen seitliche Trägerteile 35, 36, die Öffnungen zum Einstecken der Haltenasen aufweisen, die so an den Trägerteilen 35, 36 angeordnet sind, daß nach dem vollständigen Einführen der Haltenasen 33, 34 in die Öffnungen eine gewünschte Klemmkraft auf das Gurtband 1 erzeugt wird. Die Blechstreifen 31, 32 bestehen aus einfachen Blechteilen, und zur Montage des Verankerungsbeschlags 30 sind keine Falt- oder Biegvorgänge erforderlich. Zur Sicherung der seitlichen Trägerteile 35, 36 im montierten Zustand werden die Haltenasen 33, 34 gegen die Trägerteile 35, 36 verstemmt. Hierzu werden die Haltenasen, wie in der Fig. 8 zu erkennen ist, so verformt, daß deren seitliche Endabschnitte, die jeweils über die Trägerteile 35, 36 hinausstehen, nach außen gedrückt werden und dadurch die Haltenasen 33, 34 in den Trägerteilen 35, 36 festklemmen.

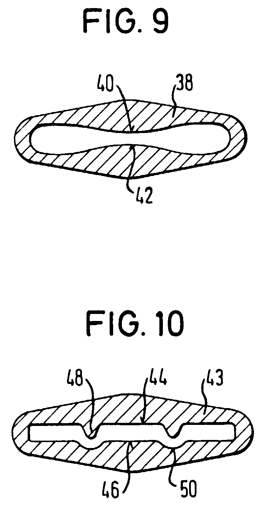

In Fig. 9 ist eine Schnittansicht eines Verankerungsbeschlags 38 einer sechsten Ausführungsform dargestellt. In dem Verankerungsbeschlag 38 ist ein Schlitz ausgebildet, in den das Gurtband vor dem Verpressen des Verankerungsbeschlags 38 eingeführt wird. Die Wandstärke des Verankerungsbeschlags 38 steigt von den Außenkanten des Gurtbandes zu dessen Mitte hin an. Auch sind die Klemmflächen 40 und 42 quer zur Längsrichtung des Gurtbandes konvex ausgebildet. Beim Zusammenpressen des Verankerungsbeschlags 38 kommen folglich zunächst die mittleren Bereiche des Verankerungsbeschlags 38 in Kontakt mit dem Gurtband. Daraufhin werden die seitlichen Abschnitte des Verankerungsbeschlags 38 zusammengepresst und dabei plastisch verformt, so daß sie nur unwesentlich zurückfedern. Das Gurtband ist nun über seine gesamte Breite eingeklemmt. Eine Verbiegung des Verankerungsbeschlags 38 beim Zusammenpressen wird durch die zur Mitte des Gurtbandes hin ansteigende Wandstärke verringert. Die konvexe Ausbildung der Klemmflächen 40, 42 kompensiert die verbleibende Biegung des Verankerungsbeschlags 38, so daß auch in der Mitte des Gurtbandes eine hohe Klemmkraft erzielt wird.

Fig. 10 zeigt die Schnittansicht eines Verankerungsbeschlags 43 einer siebten Ausführungsform. Die Klemmflächen 44, 46 dieses Verankerungsbeschlags 43 weisen in Längsrichtung des Gurtbandes verlaufende Vertiefungen 50 und dazu komplementäre Erhebungen 48 auf. Sie sichern nach dem Zusammenpressen das Gurtband gegen eine Verschiebung innerhalb des Verankerungsbeschlags 43.

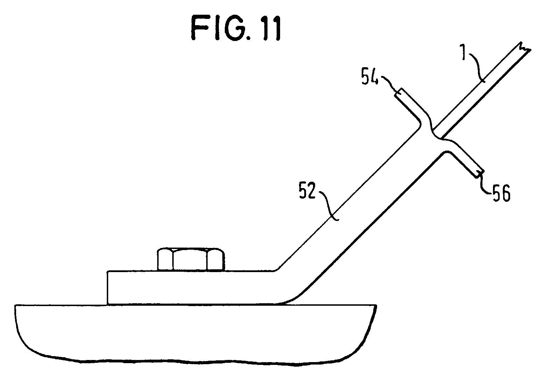

In Fig. 11 ist ein achtes Ausführungsbeispiel eines erfindungsgemäßen Verankerungsbeschlags 52 dargestellt. Das Gurtband 1 ist hier in dem rohrförmigen und flachgepressten Verankerungsbeschlag 52 aufgenommen. Die Endabschnitte 54, 56 des Verankerungsbeschlags 52 sind vom Gurtband weg senkrecht nach außen gebogen. Die umgebogenen Endabschnitte 54, 56 versteifen den Verankerungsbeschlag 52, so daß eine gleichmäßige Klemmkraftverteilung über die Breite des Gurtbands 1 erzielt wird.

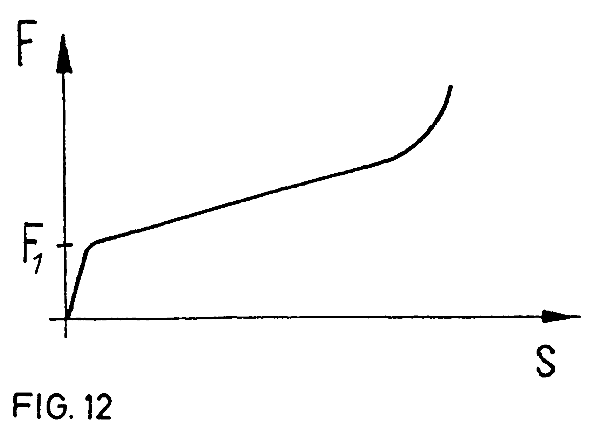

Fig. 12 zeigt den Verlauf der Gurtbandkraft F, der sich bei einer Belastung des in den Figuren 1 bis 3 gezeigten Verankerungsbeschlags 2 in Gurtbandlängsrichtung ergibt. Wird der Verankerungsbeschlag 2 mit einer Kraft in Gurtbandlängsrichtung, in der Figur 2 nach rechts, beaufschlagt, steigt die Gurtbandkraft F bis zum Erreichen eines Schwellenwerts F₁ steil an. Überschreitet die Gurtbandkraft F dann den Schwellenwert F₁, so verformt sich der Verankerungsbeschlag 2, indem seine wellenförmig ausgebildeten Abschnitte gestreckt werden. Dabei werden zunächst die Abschnitte mit großer Wellenhöhe verformt, wohingegen die Verformung der Abschnitte mit geringerer Wellenhöhe eine größere Gurtbandkraft erfordert. Die Kennlinie der Gurtbandkraft F über dem Verformungsweg S des Verankerungsbeschlags steigt nach Erreichen des Schwellenwerts F₁, der in einem Bereich zwischen 2500N und 6000N liegt, folglich kontrolliert flach an. Lastspitzen im Gurtband können dadurch vermieden werden. Erst nachdem alle wellenförmig ausgebildeten Abschnitte gestreckt sind, steigt die Kennlinie der Gurtbandkraft F wieder stark an.

## Patentansprüche

1. Fahrzeug-Sicherheitsgurt mit einem am Gurtband (1) befestigten Verankerungsbeschlag (2; 10; 20; 30), dadurch gekennzeichnet, daß der Verankerungsbeschlag (2; 10; 20; 30) zwei einander gegenüberliegende Klemmflächen (6a, 6b; 13a, 13b; 22a, 22b) aufweist, zwischen denen das Gurtband (1) eingeklemmt ist.

2. Fahrzeug-Sicherheitsgurt nach Anspruch 1, dadurch gekennzeichnet, daß der Verankerungsbeschlag (2) als flachgepresstes, rohrförmiges Bauteil ausgeführt ist.

3. Fahrzeug-Sicherheitsgurt nach Anspruch 1, dadurch gekennzeichnet, daß der Verankerungsbeschlag (7) aus einem gefalteten Blechstreifen (8a) besteht, dessen Seitenabschnitte (8b, 8c) in Längsrichtung umgefaltet sind, und die einander zugewandten Längskanten der Seitenabschnitte eine komplementär gewellte Stoßkante (9) aufweisen.

4. Fahrzeug-Sicherheitsgurt nach Anspruch 1, dadurch gekennzeichnet, daß der Verankerungsbeschlag (30) zwei aufeinanderliegende Blechstreifen (31, 32), die an den Längskanten mit seitlichen Haltenasen (33, 34) versehen sind, und seitliche Trägerteile (35, 36), die entlang der Längskanten der Blechstreifen (31, 32) angeordnet sind, aufweist und die Haltenasen (33, 34) in den Trägerteilen (35, 36) verstemmt sind.

5. Fahrzeug-Sicherheitsgurt nach einem der vorstehenden Ansprüche, dadurch gekennzeichnet, daß die Klemmflächen (6a, 6b) komplementär zueinander wellenförmig verformt sind.

6. Fahrzeug-Sicherheitsgurt nach Anspruch 5, dadurch gekennzeichnet, daß die Wellenhöhe zu der Verankerung am Fahrzeugaufbau hin in Gurtbandlängsrichtung zunimmt.

7. Fahrzeug-Sicherheitsgurt nach Anspruch 5 oder 6, dadurch gekennzeichnet, daß der Verankerungsbeschlag (2) wenigstens abschnittweise wellenförmig ausgebildet ist und durch eine Kraft in Gurtbandlängsrichtung, die durch ein vorbestimmtes Gurtkraftbegrenzungs-Diagramm bestimmt ist, durch Strecken der wellenförmig ausgebildeten Abschnitte verformbar ist.

8. Fahrzeug-Sicherheitsgurt nach Anspruch 7, dadurch gekennzeichnet, daß die bestimmte Kraft zwischen 2500N und 6000N beträgt.

9. Fahrzeug-Sicherheitsgurt nach einem der Ansprüche 1 bis 4, dadurch gekennzeichnet, daß die Klemmflächen durch halbkugelförmige Eindrückungen und komplementäre Ausbauchungen verformt sind.

10. Fahrzeug-Sicherheitsgurt nach einem der vorstehenden Ansprüche, dadurch gekennzeichnet, daß die Klemmflächen mit quer zur Längsrichtung des Gurtbandes laufenden Rillen versehen sind.

11. Fahrzeug-Sicherheitsgurt nach einem der vorstehenden Ansprüche, dadurch gekennzeichnet, daß die Klemmflächen mit einer Gummiauflage versehen sind.

12. Fahrzeug-Sicherheitsgurt nach einem der vorstehenden Ansprüche, dadurch gekennzeichnet, daß die Klemmflächen (6a, 6b) durch Niete (4) miteinander verbunden sind.

13. Fahrzeug-Sicherheitsgurt nach einem der vorstehenden Ansprüche, dadurch gekennzeichnet, daß die Klemmflächen (13a, 13b) durch eine mit einer Federscheibe (14) versehene Schraubenverbindung (15) miteinander verbunden sind.

14. Fahrzeug-Sicherheitsgurt nach einem der vorstehenden Ansprüche, dadurch gekennzeichnet, daß die Klemmflächen (22a, 22b) in Gurtbandquerrichtung gefaltet sind.

15. Fahrzeug-Sicherheitsgurt nach einem der vorstehenden Ansprüche, dadurch gekennzeichnet, daß die Wandstärke des Verankerungsbeschlags (38; 43) quer zur Längsrichtung des Gurtbandes von den Gurtbandaußenkanten zu dessen Mitte hin zunimmt.

16. Fahrzeug-Sicherheitsgurt nach einem der vorstehenden Ansprüche, dadurch gekennzeichnet, daß die Klemmflächen (40, 42) quer zur Längsrichtung des Gurtbandes konvex ausgebildet sind.

17. Fahrzeug-Sicherheitsgurt nach einem der vorstehenden Ansprüche, dadurch gekennzeichnet, daß die Klemmflächen (44, 46) in Längsrichtung des Gurtbandes verlaufende Vertiefungen (50) und komplementäre Erhebungen (48) aufweisen.

18. Fahrzeug-Sicherheitsgurt nach einem der Ansprüche 2 bis 17, dadurch gekennzeichnet, daß Endabschnitte (54, 56) des Verankerungsbeschlags (52) vom Gurtband (1) weggebogen sind.
